# EUROPÄISCHE PATENTSCHRIFT

(11) **EP 3 736 555 B1**
(45) Veröffentlichungstag und Bekanntmachung des Hinweises auf die Patenterteilung: **05.07.2023**
(21) Anmeldenummer: 19173836.8
(22) Anmeldetag: 10.05.2019
(51) Int. Cl.: G01S 13/931, G01M 11/06, G01M 17/00, G01S 7/40, G01S 7/497

(54) **KRAFTFAHRZEUG-KALIBRIERTOOL**
VEHICLE CALIBRATION TOOL
OUTIL D'ÉTALONNAGE POUR VOITURE

(43) Veröffentlichungstag der Anmeldung: 11.11.2020
(73) Patentinhaber: Beissbarth GmbH, 80993 München (DE)
(72) Erfinder: Backes, Jochen, 80993 München (DE)
(74) Vertreter: Schmitt-Nilson Schraud Waibel Wohlfrom Patentanwälte Partnerschaft mbB

(56) Entgegenhaltungen:
- EP-A2- 1 953 518
- WO-A1-2018/050173
- WO-A1-2019/025062
- US-A- 5 321 439
- US-A1- 2015 134 191

## Beschreibung

Die Erfindung betrifft ein Kalibrierhilfsmittel ("Kalibriertool"), das zum Einsatz in Kraftfahrzeugwerkstätten vorgesehen ist.

Moderne Fahrzeuge sind häufig mit Fahrerassistenzsystemen, wie z.B. Abstandswarnern, Brems- und Spurhalteassistenten usw., ausgestattet, die den Fahrer beim Steuern des Fahrzeugs unterstützen. Fahrerassistenzsysteme verfügen in der Regel über wenigstens einem Fahrzeugumfeldsensor, beispielsweise einen Radarsensor zur Abstandsmessung und/oder eine Kamera zum Überwachen der Umgebung des Fahrzeugs. Solche Fahrzeugumfeldsensoren müssen nach dem Einbau in das Fahrzeug, aber häufig auch nach dem Austauschen der Frontscheibe, justiert und kalibriert werden.

Hierfür wird in der Regel ein Kalibrierhilfsmittel ("Kalibriertool"), das ein geeignetes Kalibrierelement aufweist, im Erfassungsbereich des Fahrzeugumfeldsensors außerhalb des Fahrzeugs platziert. Das Kalibrierelement hat ein optisches Muster ("Fahrerassistenzsystem-Referenzmuster") zur Kalibrierung von optischen (kamerabasierten) Fahrzeugumfeldsensoren und/oder einen Reflektor zur Kalibrierung von radarbasierten Fahrzeugumfeldsensoren.

EP 1 953 518 A2 offenbart ein Vorrichtung mit einer Kamera und einer Auswerteeinrichtung zum Ausrichten eines Fahrzeug-Umfeldsensors oder Scheinwerfers an einem Fahrzeug, wobei ein Passpunktsystem aus vier Messpunkten an dem Fahrzeug und aus sechs aus unterschiedlichen Perspektiven aufgenommenen Bildern mittels der Kamera und der Auswerteeinrichtung ermittelbar ist, Daten zur Ermittlung einer Fahrbahnebene und einer Fahrachse des Fahrzeugs mittels des Passpunktsystems, der Kamera und der Auswerteeinrichtung während einer Anfahrt erfassbar, die Fahrbahnebene und die Fahrachse ermittelbar sind, eine Justage-Hilfseinrichtung vor dem Fahrzeug-Umfeldsensor oder Scheinwerfer des Fahrzeugs platzierbar und mittels der Kamera und mindestens dreier Messpunkte an der Justage-Hilfseinrichtung bezüglich der Fahrachse und der Fahrbahnebene ausrichtbar, eine Ausrichtung des Fahrzeug-Umfeldsensors oder Scheinwerfers zur Justage-Hilfseinrichtung ermittelbar und der Fahrzeug-Umfeldsensor oder Scheinwerfer bei Vorliegen einer Fehlausrichtung ausrichtbar ist.

WO 2018/050173 A1 offenbart einen Fahrzeugprüfstand zum Kalibrieren und / oder Testen von Systemen eines Fahrzeugs, die wenigstens eine Kamera umfassen. Der Fahrzeugprüfstand weist eine Sollposition für das Fahrzeug auf. Den Kameras von zu testenden Systemen ist zumindest eine eine Bilddarstellung wiedergebende und/oder eine Bilddarstellung darstellende Fläche zugeordnet. Mehrere Streulicht absorbierende Elemente sind angeordnet, die jeweils aus einer wandförmigen Abgrenzung des Fahrzeugprüfstandes bestehen, die ein Eindringen von Licht in den Fahrzeugprüfstand reduziert, wobei mehrere wandförmige Abgrenzungen eine allseitige seitliche Begrenzung des Fahrzeugprüfstands ergeben. Es ist eine Tragstruktur vorhanden mit wenigstens einem oberhalb des Fahrzeugs angeordneten länglichen Tragelement sowie Stellmittel zur Bewegung zumindest einer der zumindest einen eine Bilddarstellung wiedergebenden und/oder eine Bilddarstellung darstellenden Flächen und / oder wenigstens einer Einheit zur Prüfung eines Radarsensors des Fahrzeugs und / oder wenigstens einer Einheit zur Prüfung eines optischen Abstandssensors des Fahrzeugs und/oder wenigstens einer Einheit zur Prüfung eines Nachtsichtgerätes des Fahrzeugs in horizontaler Richtung entlang dem wenigstens einen Tragelement.

Es ist eine Aufgabe der Erfindung, die Arbeitsabläufe beim Einsatz eines Kalibriertools zu vereinfachen und die damit verbundenen Kosten zu reduzieren.

Ein erfindungsgemäß ausgebildetes Kalibriertool umfasst wenigstens ein Kalibrierelement, das zur Darstellung wenigstens eines Musters, das zum Kalibrieren eines optischen, insbesondere kamerabasierten, Fahrzeugumfeldsensors geeignet ist, und/oder mit einem Reflektor zum Kalibrieren eines radarbasierten Fahrzeugumfeldsensors ausgebildet ist. Das Kalibriertool umfasst darüber hinaus ein Scheinwerfereinstellgerät, das zum Einstellen wenigstens eines Fahrzeugscheinwerfers ausgebildet ist.

Das Kalibriertool umfasst auch eine Säule, die sich im Wesentlichen in vertikaler Richtung erstreckt und einen Fuß mit Rollen, die dazu ausgebildet sind, das Kalibriertool beweglich auf einem Boden abzustützen. Das Kalibriertool umfasst darüber hinaus einen an der Säule angebrachten Träger, der sich im Wesentlichen in horizontaler Richtung erstreckt. Das wenigstens eine Kalibrierelement und das Scheinwerfereinstellgerät sind an dem Träger angebracht.

Die Erfindung umfasstn auch ein Verfahren zum Kalibrieren eines Fahrzeugumfeldsensors und zum Einstellen wenigstens eines Fahrzeugscheinwerfers, wobei das Verfahren umfasst: (A) ein Kalibriertool, das gemäß einem Ausführungsbeispiel der Erfindung ausgebildet ist, vor einem Fahrzeug zu positionieren und in einer vorgegebenen Orientierung zum Fahrzeug auszurichten; (B) ein auf dem wenigstens einen Kalibrierelement des Kalibriertools gezeigtes Muster zu verwenden, um wenigstens einen Fahrzeugumfeldsensor eines Fahrerassistenzsystems zu kalibrieren; und (C) das Scheinwerfereinstellgerät des Kalibriertools zu verwenden, um wenigstens einen Scheinwerfer des Fahrzeugs einzustellen.

Ein Kalibriertool gemäß einem Ausführungsbeispiel der Erfindung kombiniert die Funktionen eines herkömmlichen Kalibriertools mit den Funktionen eines Scheinwerfereinstellgeräts. Ein Kalibriertool, das gemäß einem Ausführungsbeispiel der Erfindung ausgebildet ist, kann daher nicht nur zum Kalibrieren von Fahrzeugumfeldsensoren, sondern auch zum Einstellen der Scheinwerfer eines Fahrzeugs verwendet werden.

Es ist daher nur ein einziges Gerät erforderlich, um die Fahrzeugumfeldsensoren des Fahrzeugs zu kalibrieren und seine Scheinwerfer korrekt einzustellen.

Die Arbeitsabläufe in der Werkstatt können daher durch den Einsatz eines erfindungsgemäßen Kalibriertools vereinfacht und beschleunigt werden. Da auf ein zusätzliches Gerät zum Einstellen der Scheinwerfer verzichtet werden kann, wird der Platzbedarf in der Werkstatt reduziert, so dass der in einer Werkstatt zur Verfügung stehende Platz effektiver genutzt werden kann.

In einer Ausführungsform sind wenigstens eine Kalibrierelement und das Scheinwerfereinstellgerät in einer bekannten geometrischen Beziehung zueinander an dem Kalibriertool angeordnet.

Sowohl Kalibrierelemente, die zum Kalibrieren von Fahrzeugumfeldsensoren verwendet werden, als auch ein Scheinwerfereinstellgerät müssen in eine vorgegebene Position und Orientierung zum Fahrzeug ausgerichtet werden, um die Kalibrierung der Fahrzeugumfeldsensoren und die Scheinwerfereinstellung durchführen zu können.

Ist die geometrische Beziehung zwischen dem wenigstens einen Kalibrierelement und dem Scheinwerfereinstellgerät bekannt, ist es ausreichend, das Kalibriertool ein einziges Mal auszurichten, um sowohl das Kalibrieren des wenigstens einen Fahrzeugumfeldsensors als auch die Scheinwerfereinstellung durchführen zu können. Da in diesem Fall auf ein erneutes Ausrichten des Kalibriertools verzichtet werden kann, werden die Arbeitsabläufe noch weiter vereinfacht und beschleunigt. Wenn die geometrische Beziehung zwischen dem wenigstens einen Kalibrierelement und dem Scheinwerfereinstellgerät bekannt ist, können das Kalibrieren des Fahrzeugumfeldsensors und das Einstellen der Scheinwerfer in einem gemeinsamen Bezugssystem durchgeführt werden. Dies ist besonders vorteilhaft, wenn das Fahrerassistenzsystem dazu ausgebildet ist, auch die Scheinwerfer des Fahrzeugs anzusteuern. Fahrerassistenzsysteme können beispielsweise dazu ausgebildet sein, das Fernlicht, oder zumindest Teile des Fernlichts, abzublenden oder abzuschatten, wenn Gegenverkehr erkannt wird. Durch Kalibrieren in einem gemeinsamen Bezugssystem kann die Qualität der von dem Fahrerassistenzsystem bereitgestellten Assistenz noch weiter erhöht werden.

In einer Ausführungsform ist die Säule um eine Achse (Hochachse) drehbar ist, die sich ebenfalls im Wesentlichen in vertikaler Richtung erstreckt.

Der Gierwinkel des wenigstens einen Kalibrierelements und des Scheinwerfereinstellgeräts kann durch Drehen der Säule um die Hochachse verändert und auf einen gewünschten Wert eingestellt werden. Alternativ kann der Träger so an der Säule befestigt sein, dass er gegenüber der Säule um die Hochachse drehbar ist, um den Gierwinkel einstellen zu können.

In einer Ausführungsform umfasst das Kalibriertool eine in Bezug auf das Fahrzeug ausrichtbare und fixierbare Führungsschiene, die sich insbesondere in im Wesentlichen horizontaler Richtung parallel zum Träger erstreckt. Die Führungsschiene und das Kalibriertool sind so ausgebildet, dass das Scheinwerfereinstellgerät und/oder das Kalibriertool entlang der Führungsschiene bewegbar sind. Auf diese Weise kann das Scheinwerfereinstellgerät entlang der Führungsschiene bewegt werden, um der Reihe nach vor jedem der Scheinwerfer des Fahrzeugs positioniert zu werden um diese einzustellen, ohne dass das Kalibriertool / Scheinwerfereinstellgerät dabei jeweils erneut gegenüber dem Fahrzeug ausgerichtet werden muss.

In einer Ausführungsform umfasst das Kalibriertool zwei Kalibrierelemente, die zum Anzeigen von Mustern ausgebildet sind. Die beiden Kalibrierelemente können mechanisch so miteinander gekoppelt sein, dass sie synchron, d.h. nur gleichzeitig und mit der gleichen Geschwindigkeit, und gegensinnig, d.h. in entgegengesetzte Richtungen, an dem Kalibriertool, insbesondere entlang des Trägers, bewegbar sind.

Dies ermöglicht es auf einfache Weise, die Kalibrierelemente gemäß den Vorgaben des Herstellers des Fahrerassistenzsystems vor dem Fahrzeug zu positionieren. Insbesondere ist auf diese Weise sichergestellt, dass die beiden Kalibrierelemente in jeder Konfiguration, insbesondere auch nach einer Veränderung des Abstandes zwischen den Kalibrierelementen, symmetrisch zu einer Bezugsachse des Fahrzeuges vor dem Fahrzeug positioniert sind.

In einer Ausführungsform umfasst das Kalibriertool einen Antrieb mit einem Motor, der es ermöglicht, die Position des wenigstens einen Kalibrierelements motorisch zu verändern. Der Motor kann von einer Steuervorrichtung angesteuert werden, die ausgebildet ist, das wenigstens eine Kalibrierelement automatisch an einer vorgegebenen Position zu positionieren.

In einer Ausführungsform weist das Kalibriertool Positionssensoren auf, die ausgebildet sind, die aktuelle Position des wenigstens einen Kalibrierelements zu erfassen und an die Motorsteuerung zu übermitteln. Die Steuervorrichtung kann dazu ausgebildet sein, die aktuelle Position des wenigstens einen Kalibrierelements mit einer vorgegebenen Position zu vergleichen und den so Motor ansteuern, dass die Differenz zwischen der aktuellen Position und der vorgegebenen Position des wenigstens einen Kalibrierelements verringert wird.

In einer Ausführungsform ist ein einzelnes Kalibrierelement mittig am Kalibriertool angebracht.

In einer Ausführungsform ist das wenigstens eine Kalibrierelement ein konstantes Kalibrierelement (Mustertafel), auf dem ein unveränderliches Muster ausgebildet ist. Ein solches Kalibrierelement, bzw. ein Satz solcher Kalibrierelemente, auf denen unterschiedliche Muster ausgebildet sind, ist vor allem dann vorteilhaft, wenn nur eine geringe Anzahl unterschiedlicher Muster benötigt wird.

In einer alternativen Ausführungsform ist das wenigstens eine Kalibrierelement als variables Kalibrierelement ausgebildet, das in der Lage ist, durch eine entsprechende Ansteuerung wahlweise eines von mehreren unterschiedlichen Mustern anzuzeigen. Das wenigstens eine Kalibrierelement kann insbesondere mit einem LCD- oder TFT-Bildschirm oder als elektronisches Papier ("E-Paper") ausgebildet sein.

Auf diese Weise können den jeweiligen Herstellervorgaben entsprechende Muster für verschiedene Fahrzeugumfeldsensoren / Fahrerassistenzsysteme auf dem wenigstens einen Kalibrierelement angezeigt werden. Es ist daher nicht notwendig, dass wenigstens eine Kalibrierelement physisch auszuwechseln, um das Kalibriertool zum Kalibrieren der Fahrzeugumfeldsensoren von Fahrerassistenzsystemen unterschiedlicher Hersteller verwenden zu können.

Der Einsatz des Kalibriertools wird auf diese Weise noch weiter vereinfacht. Insbesondere ist es nicht notwendig, eine große Anzahl unterschiedlicher Kalibrierelemente (Mustertafeln) vorzuhalten, um alle benötigten Muster darstellen zu können. Da Mustertafeln mit hoher Präzision hergestellt werden müssen, ist ihre Herstellung teuer. Die Möglichkeit, auf das Vorhalten eines großen Satzes unterschiedlicher Mustertafeln in der Werkstatt verzichten zu können, ist mit einer Kostenersparnis verbunden. Darüber hinaus kann der zur Lagerung der Mustertafeln benötigte Platz eingespart werden.

Ein variables Kalibrierelement ermöglicht es darüber hinaus, die Größe des angezeigten Musters zu variieren. Die Größe des angezeigten Musters kann insbesondere als Funktion eines zuvor bestimmten Abstandes des Kalibriertools von dem Fahrzeug variiert bzw. eingestellt werden. Insbesondere können auf einfache und kostengünstige Weise verschiedene Abstände zwischen dem auf dem Kalibrierelement angezeigten Muster und dem Fahrzeugumfeldsensor simuliert werden.

Die Skalierung und/oder Verschiebung der angezeigten Muster erfolgt hierbei innerhalb der ausgerichteten Kalibrierelemente, ohne dass die Position und Ausrichtung der Kalibrierelemente selbst verändert wird. Die Muster können daher skaliert und/oder verschoben werden, ohne das Kalibriertool neu ausrichten zu müssen.

In einer Ausführungsform umfasst das Kalibriertool eine Höhenverstellvorrichtung, die es ermöglicht, die Höhe des wenigstens einen Kalibrierelements und des Scheinwerfereinstellgeräts zu variieren. Die Höhenverstellvorrichtung ist insbesondere ausgebildet, die vertikale Position des Trägers entlang der Säule / Hochachse zu verändern.

In einer Ausführungsform umfasst das Kalibriertool wenigstens eine Winkelverstellvorrichtung, die es ermöglicht, den Gier-, Roll- und/oder Nickwinkel des wenigstens einen Kalibrierelements und des Scheinwerfereinstellgeräts zu variieren.

Der Abstand des Kalibriertools, insbesondere des wenigstens einen Kalibrierelements und/oder des Scheinwerfereinstellgeräts, von dem Fahrzeug, insbesondere der Abstand von einer Front oder einer Achse des Fahrzeugs, kann bestimmt und auf einen vorgegebenen Wert eingestellt werden.

Auf diese Weise können das wenigstens ein Kalibrierelement und das Scheinwerfereinstellgerät zuverlässig in einem vorgegebenen Abstand und in einer vorgegebenen Ausrichtung vor dem Fahrzeug positioniert werden.

Die Höhenverstellvorrichtung und die Winkelverstellvorrichtung können jeweils wenigstens einen Motor umfassen, der es ermöglicht, die Höhe und die Winkel motorisch zu verändern.

Die Motoren können von einer automatischen Steuervorrichtung angesteuert werden, die ausgebildet ist, das wenigstens eine Kalibrierelement und das Scheinwerfereinstellgerät automatisch in einer vorgegebenen Ausrichtung auszurichten.

In einer Ausführungsform sind an dem Kalibriertool Höhen- und/oder Winkelsensoren vorgesehen, die ausgebildet sind, die aktuelle Position und Ausrichtung des Trägers, des wenigstens einen Kalibrierelements und/oder des Scheinwerfereinstellgeräts zu erfassen und an die Steuervorrichtung zu übermitteln. Die Steuervorrichtung kann dann die aktuelle Position und Ausrichtung des Trägers, des wenigstens einen Kalibrierelements und/oder des Scheinwerfereinstellgeräts, die durch die Höhen- und/oder Winkelsensoren bestimmt worden ist, mit einer vorgegebenen Position und Ausrichtung vergleichen und die Motoren so ansteuern, dass die Differenz zwischen der aktuellen Position/Ausrichtung und der vorgegebenen Position/Ausrichtung minimiert wird.

In einer Ausführungsform umfasst das Kalibriertool wenigstens ein Ausrichtelement, das es ermöglicht, das Kalibriertool auf die Fahrzeuglängsmittelebene eines Fahrzeugs auszurichten.

Bei dem Ausrichtelement kann es sich beispielsweise um einen Laser oder eine andere optische Vorrichtung, z.B. eine optische Zielvorrichtung mit "Kimme und Korn", handeln, die in einer bekannten geometrischen Beziehung zu dem Kalibrierelement und/oder dem Scheinwerfereinstellgerät ausgerichtet ist und die es ermöglicht, das Kalibriertool auf Merkmale des Fahrzeugs, z.B. ein Herstellerlogo und/oder eine Antenne, die auf der Fahrzeuglängsmittelebene angeordnet sind, auszurichten. Mit Hilfe eines Lasers oder eine andere optischen (Ziel-)Vorrichtung kann das Kalibriertool besonders einfach und schnell in Bezug auf das Fahrzeug ausgerichtet werden.

Bei dem Ausrichtelement kann es sich auch um wenigstens ein Target handeln, das in einer bekannten geometrischen Beziehung zu dem Kalibrierelement und dem Scheinwerfereinstellgerät an dem Kalibriertool angeordnet ist, so dass das Kalibriertool durch Betrachten des wenigstens einen Targets in Bezug auf das Fahrzeug ausgerichtet werden kann.

In einer Ausführungsform ist das wenigstens eine Target an dem Träger des Kalibriertools angebracht. Insbesondere können zwei Targets an gegenüberliegenden Endes des Trägers des Kalibriertools angebracht sein.

In einer Ausführungsform ist das wenigstens eine Kalibrierelement so ausgebildet, dass es auch als Ausrichtelement verwendet werden kann. In diesem Fall kann auf zusätzliche Targets verzichtet werden.

Das wenigstens eine Target kann dazu ausgebildet sein, mit einem optischen System, insbesondere einem Achsmesssystem, zusammenzuwirken, um es zu ermöglichen, das Kalibriertool nach einer erfolgten Achsvermessung auf die von dem optischen System bestimmte Fahrwerksgeometrie des Fahrzeugs auszurichten. Insbesondere kann das Kalibriertool auf diese Weise auf eine als Ergebnis einer Achsvermessung bestimmte geometrische Fahrachse ("Fahrzeug-Geoachse") des Fahrzeugs ausgerichtet werden. Mit Hilfe eines optischen Systems kann das Kalibriertool sehr genau auf die Fahrwerksgeometrie, insbesondere auf die geometrische Fahrachse , ausgerichtet werden, so dass die Kalibrierung mit großer Genauigkeit durchgeführt werden kann.

Ausführungsbeispiele der Erfindung umfassen auch ein optisches System, insbesondere ein Achsmesssystem, das ausgebildet ist, wenigstens ein Merkmal der Achsgeometrie, z.B. die geometrische Fahrachse, des Fahrzeugs zu bestimmen und mit einem erfindungsgemäßen Kalibriertool zusammenzuwirken, um das Kalibriertool in Bezug auf das zuvor bestimmte Merkmal der Achsgeometrie auszurichten.

Mit dem optischen System/Achsmesssystem können auch weitere Parameter des Fahrzeugs bestimmt werden, z.B. die Spurweite oder der Fahrzeugüberhang, die als Basiswerte für den Kalibrierprozess des wenigstens einen Fahrzeugumfeldsensors benutzt werden können.

In einer Ausführungsform umfasst das optische System wenigstens zwei Messköpfe, wobei jeweils wenigstens ein Messkopf auf jeder Seite eines Fahrzeugs angeordnet ist. Jeder Messkopf ist insbesondere in Längsrichtung des Fahrzeugs zwischen einem Vorderrad und einem Hinterrad des Fahrzeugs angeordnet und ausgebildet, Bilder von Messtafeln, die an den Rädern des Fahrzeugs angeordnet sind, optisch zu erfassen. Dazu weist jeder der Messköpfe wenigstens eine Kamera auf. Jeder Messkopf weist insbesondere eine nach vorne und eine nach hinten ausgerichtete Kamera auf. Jede Kamera kann einer Mono-Kamera oder eine Stereo-Kamera sein. Bei den Kameras kann es sich um Farbkameras oder um kostengünstigere s/w-Kameras handeln.

In einer Ausführungsform ist das optische System ausgebildet, die Bilder der Messtafeln auszuwerten, um die Achsgeometrie des Fahrzeugs, insbesondere die geometrische Fahrachse des Fahrzeugs, zu bestimmen.

Ausführungsbeispiele der Erfindung umfassen auch einen Messplatz, der mit einem erfindungsgemäßen Kalibriertool und einem solchen optischen System bzw. Achsmesssystem ausgestattet ist.

In einer Ausführungsform ist jeder Messkopf ausgebildet, z.B. mit Hilfe von Kameras, Bilder wenigstens eines Targets, das an dem Kalibriertool vorhanden ist, aufzunehmen und auszuwerten, um die Position und Ausrichtung des Kalibriertools auf dem Messplatz zu bestimmen.

Ein Ausführungsbeispiel eines erfindungsgemäßen Kalibriertools wird in Folgenden unter Bezugnahme auf die Figuren beschrieben.
Figur 1 zeigt eine schematische Draufsicht eines Messplatzes mit einem Fahrzeug und einem vor dem Fahrzeug angeordneten Kalibriertool, das gemäß einem Ausführungsbeispiel der Erfindung ausgebildet ist.
Figur 2 zeigt eine schematische perspektivische Ansicht des Messplatzes mit dem Fahrzeug und dem vor dem Fahrzeug angeordneten Kalibriertool.
Figur 3 zeigt eine Frontansicht des Kalibriertools.
Figur 4 zeigt eine perspektivische Ansicht des Kalibriertools.
Figuren 5a und 5b zeigen vergrößerte Darstellungen eines Fußes des Kalibriertools.
Figur 6 zeigt eine vergrößerte Darstellung eines Bereichs des Kalibriertools, in dem Neigungsmesselemente angebracht sind.
Figur 7 zeigt eine Ansicht einer vertikalen Säule des Kalibriertools ohne Verkleidung.
Figur 8 zeigt eine vergrößerte Darstellung eines horizontalen Trägers des Kalibriertools.
Figur 9 zeigt schematisch ein variables Kalibrierelement mit zwei beispielhaft dargestellten unterschiedlich skalierten Mustern.

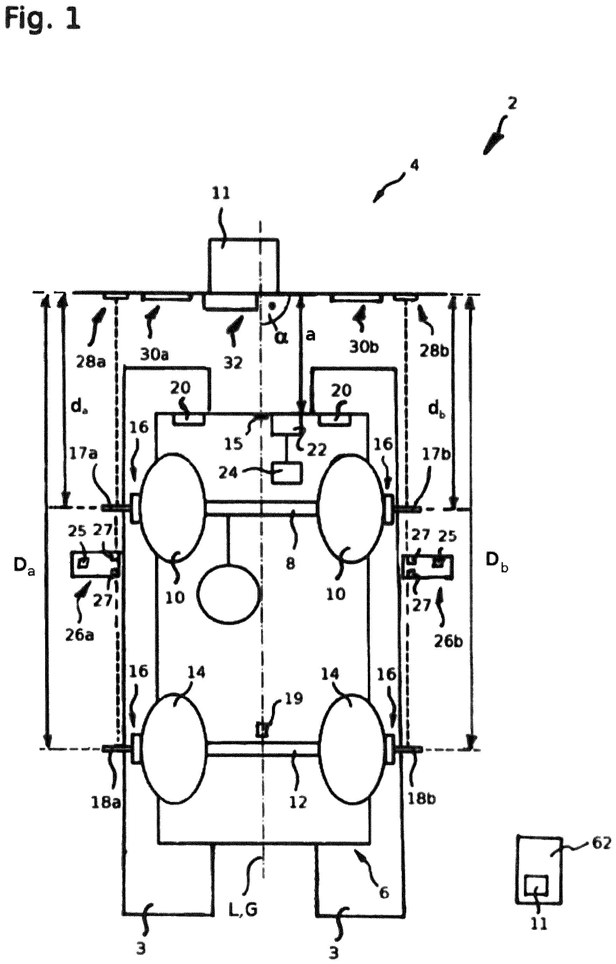

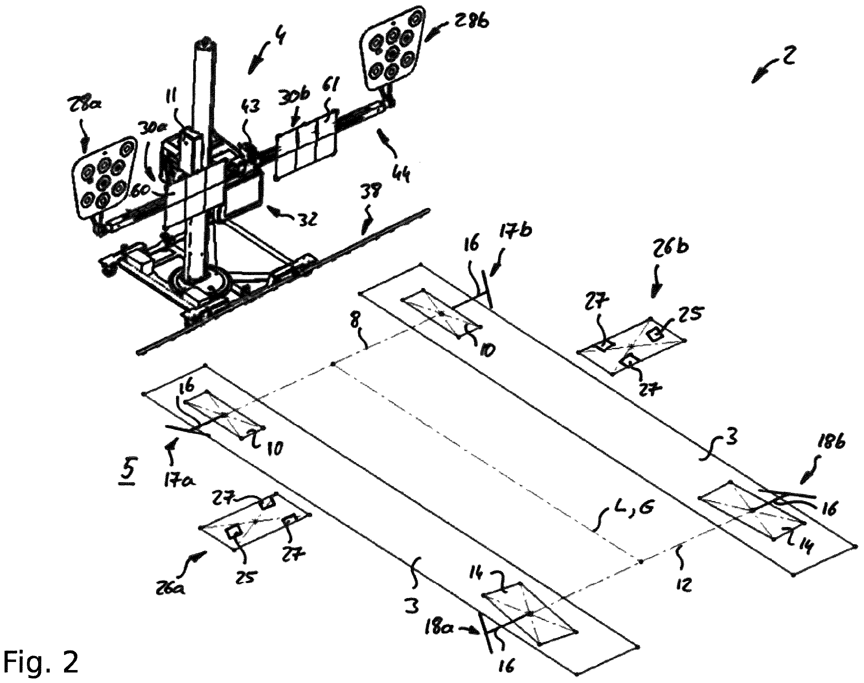

Figur 1 zeigt eine schematische Draufsicht, und Figur 2 zeigt eine schematische perspektivische Ansicht eines Messplatzes 2 mit einem Fahrzeug 6 und einem vor dem Fahrzeug 6 angeordneten Kalibriertool 4, das gemäß einem Ausführungsbeispiel der Erfindung ausgebildet ist.

Das Fahrzeug 6 hat an einer Vorderachse 8 angebrachte Vorderräder 10 und an einer Hinterachse 12 angebrachte Hinterräder 14. Die Räder 10, 14 können auf Fahrschienen 3, z.B. Fahrschienen 3 einer nicht im Detail gezeigten Hebe- oder Arbeitsbühne, positioniert sein.

Das Fahrzeug 6 hat Frontscheinwerfer 20 und wenigstens ein Fahrerassistenzsystem 24, das mit wenigstens einem Fahrzeugumfeldsensor 22, beispielsweise einer Kamera oder einem Radarsensor, verbunden ist.

An den Rädern 10, 14 des Fahrzeugs 6 sind mit Hilfe von Radadaptern 16 Messtafeln 17a, 17b, 18a, 18b angebracht.

Rechts und links neben dem Fahrzeug 6 ist jeweils ein Messkopf 26a, 26b angeordnet. Die Messköpfe 26a, 26b sind jeweils mit Kameras 27 ausgestattet, die ausgebildet sind, Bilder der an den Rädern 10, 14 angebrachten Messtafeln 17a, 17b, 18a, 18b zu erfassen. Die Messköpfe 26a, 26b umfassen auch jeweils ein Referenzsystem 25. Die Referenzsysteme 25 ermöglichen es, die Position und Ausrichtung der Messköpfe 26a, 26b zueinander zu Bestimmen.

Die durch die Referenzsysteme 25 gegeneinander referenzierten Messköpfe 26a, 26b bilden ein optisches System, insbesondere ein Achsmesssystem, 26a, 26b, das es in Kombination mit den an den Rädern 10, 12 des Fahrzeugs 6 angebrachten Messtafeln 17a, 17b, 18a, 18b ermöglicht, die Achsgeometrie des Fahrzeugs 6 zu vermessen. Das optische System 26a, 26b kann insbesondere dazu ausgebildet sein, die geometrische Fahrachse G zu bestimmen.

Zur Vereinfachung der Darstellung stimmt in dem in den Figuren 1 und 2 gezeigten Ausführungsbeispiel die geometrische Fahrachse G mit der Fahrzeuglängsmittelebene L des Fahrzeugs 6 überein. Im Allgemeinen kann die die geometrische Fahrachse G von der Fahrzeuglängsmittelebene L abweichen.

Das vor dem Fahrzeug 6 angeordnete Kalibriertool 4 umfasst zwei Targets 28a, 28b, jeweils ein Target 28a, 28b auf jeder Seite des Fahrzeugs 6. Die an dem Kalibriertool 4 angebrachten Targets 28a, 28b dienen als Ausrichtelemente. Sie werden von Kameras 27 der Messköpfe 26a, 26b optisch erfasst und ermöglichen es dem optischen System 26a, 26b, die Abstände Dₐ, D_{b} (siehe Figur 1) zwischen den an der Hinterachse 12 des Fahrzeugs 6 angebrachten Messtafeln 18a, 18b und dem der jeweiligen Messtafel 18a, 18b zugeordneten Target 28a, 28b zu bestimmen.

Auf diese Weise können der Abstand des Kalibriertools 4 von der Hinterachse 12 des Fahrzeugs 6 und die Ausrichtung des Kalibriertools 4 zur geometrischen Fahrachse G des Fahrzeugs 6 mit hoher Genauigkeit bestimmt werden. Wenn die Abstände der Messköpfe 26a, 26b von der Vorderachse 8 aus einer vorangegangenen Messung bekannt sind, können alternativ oder zusätzlich auch die Abstände dₐ, d_{b} des Kalibriertools 4 von der Vorderachse 8 bestimmt werden.

Alternativ oder zusätzlich kann das Kalibriertool 4 eine Zielvorrichtung 43, z.B. einen Laser, aufweisen, die es ermöglicht, das Kalibriertool 4 durch Anpeilen optischer Merkmale des Fahrzeugs 6, wie z.B. eines Herstellerlogos 15 und/oder einer Dachantenne 19, auf die Fahrzeuglängsmittelebene L auszurichten.

Das Kalibriertool 4 umfasst darüber hinaus zwei Kalibrierelemente 30a, 30b, die zum Justieren/Kalibrieren des wenigstens einen Fahrzeugumfeldsensors 22 ausgebildet sind, und ein Scheinwerfereinstellgerät 32, das zum Einstellen der Scheinwerfer 20 des Fahrzeugs 6 vorgesehen ist.

Die Kalibrierelemente 30a, 30b können optional so ausgebildet sein, dass sie auch als Ausrichtelemente verwendbar sind. In diesem Fall kann auf separate Targets 28a, 28b, die zusätzlich zu den Kalibrierelementen 30a, 30b vorhanden sind, verzichtet werden.

Obwohl in den Figuren jeweils zwei Kalibrierelemente 30a, 30b gezeigt sind, kann auch nur ein einziges Kalibrierelement 30a, 30b vorgesehen sein, wenn dies zum Kalibrieren des jeweiligen Fahrzeugumfeldsensors 22 ausreichend ist. Ein einziges Kalibrierelement 30a, 30b kann insbesondere mittig am Kalibriertool 4 angebracht sein.

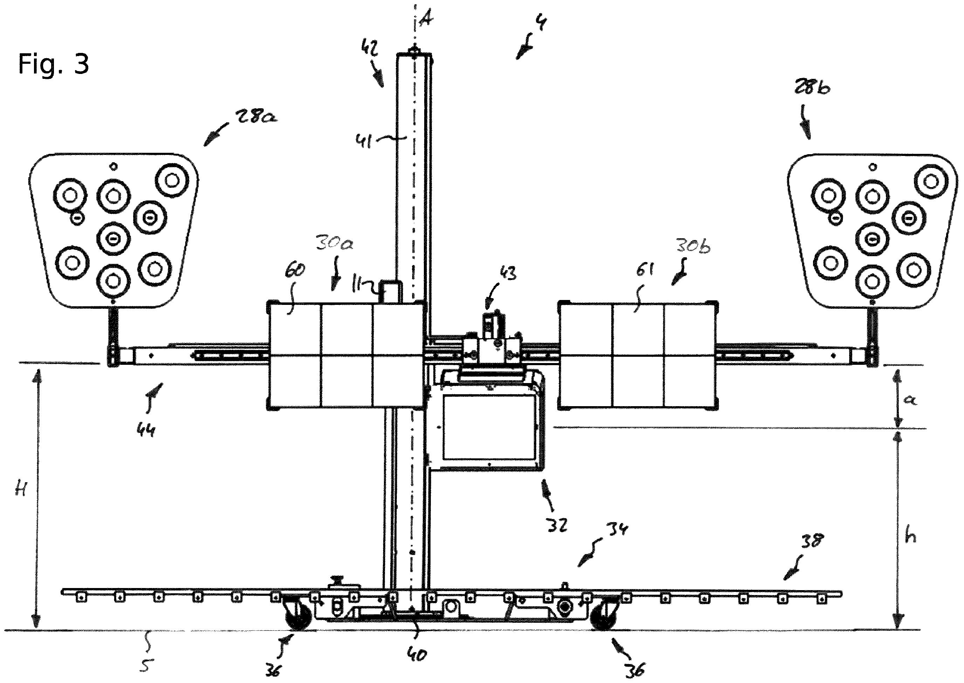

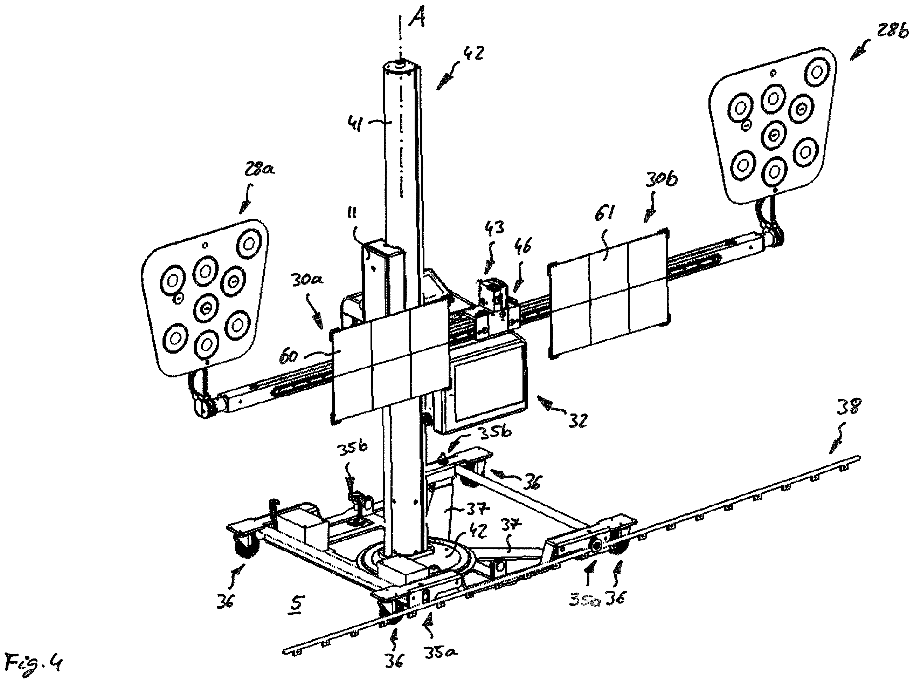

Figur 3 zeigt eine Frontansicht und Figur 4 zeigt eine perspektivische Ansicht eines Kalibriertools 4 gemäß einem Ausführungsbeispiel der Erfindung.

Das Kalibriertool 4 hat einen Fuß 34 mit Rollen 36, die das Kalibriertool 4 beweglich auf einem Boden 5 des Messplatzes 2 abstützen. Die Rollen 36 weisen in den Figuren nicht sichtbare Bremsvorrichtungen auf, die es ermöglichen, die Rollen 36 zu blockieren, um das Kalibriertool 4 an einer gewünschten Position auf dem Boden 5 des Messplatzes 2 zu arretieren.

Optional weist das Kalibriertool 4 eine Führungsschiene 38 auf, die so an dem Fuß 34 angebracht ist, dass der Fuß 34 entlang der Führungsschiene 38 beweglich ist. Die Führungsschiene 38 ist an Fixpunkten des Messplatzes 2, beispielsweise an den Fahrschienen 3, fixierbar. Wenn die Führungsschiene 38 am Messplatz 2 fixiert ist, kann das Kalibriertool 4 entlang der Führungsschiene 38 quer zum Fahrzeug 6 bewegt werden, ohne dabei die Ausrichtung des Kalibriertools 4 zur geometrischen Fahrachse G bzw. zur Fahrzeuglängsmittelebene L zu verändern. Das Kalibriertool 4 kann insbesondere quer zum Fahrzeug 6 entlang der Führungsschiene 38 bewegt werden, um das Scheinwerfereinstellgerät 32 wahlweise vor einem der Scheinwerfer 20 des Fahrzeugs 6 zu positionieren.

Da die Bewegung des Kalibriertools 4 in diesem Fall durch die Führungsschiene 38 vorgegeben ist, kann auf ein erneutes Ausrichten des Kalibriertools 4 verzichtet werden, nachdem das Kalibriertool 4 entlang der Führungsschiene 38 bewegt worden ist.

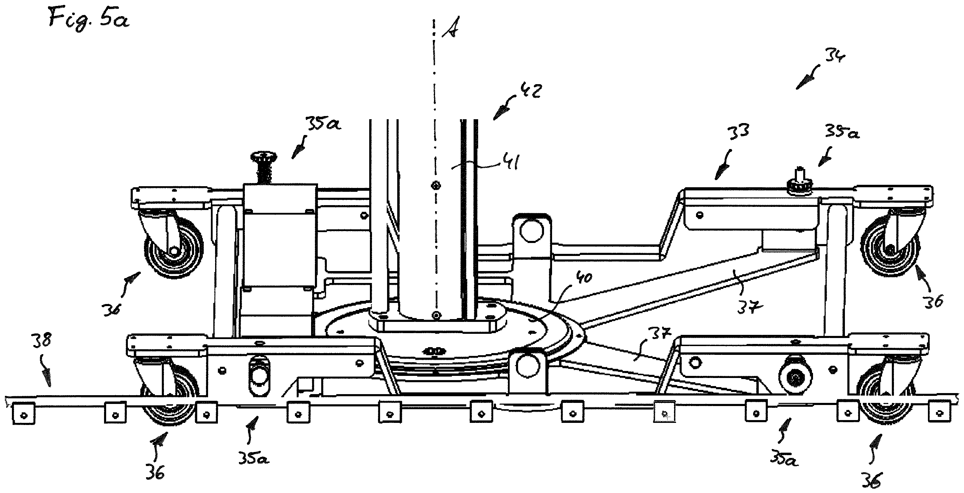

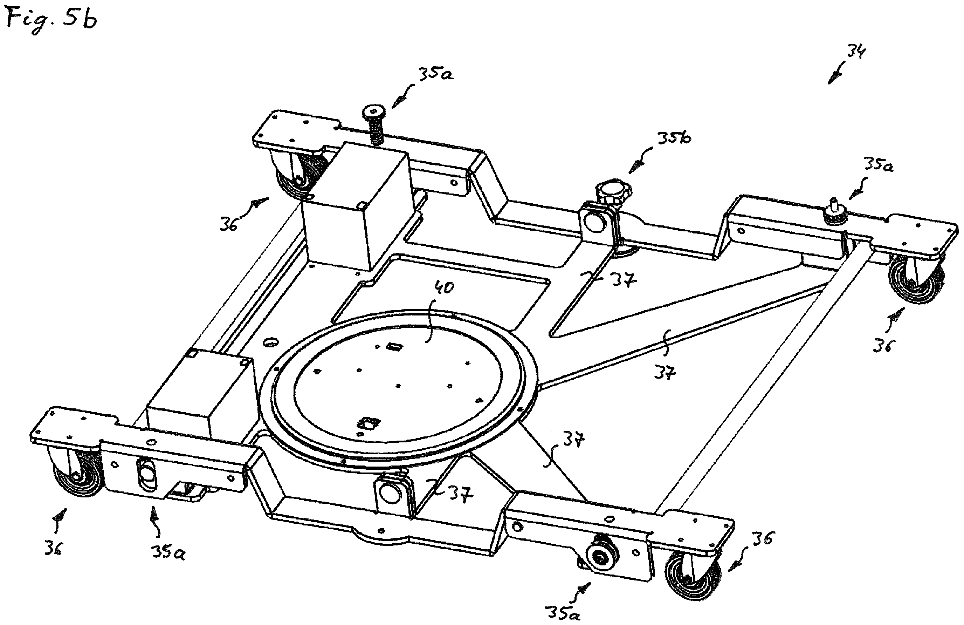

Die Figuren 5a und 5b zeigen jeweils eine vergrößerte Darstellung des Fußes 34 eines Kalibriertools 4, das gemäß einem Ausführungsbeispiel der Erfindung ausgebildet ist.

Im Zentrum des Fußes 34 befindet sich eine Drehplatte 40, auf der eine vertikale Säule 42 des Kalibriertools 4 abgestützt ist. Die Säule 42 ist nur in der Figur 5a, nicht aber in der Figur 5b, gezeigt.

Die Drehplatte 40 ist durch sternförmig von der Drehplatte 40 nach außen verlaufende Trägerelemente 37 an einem äußeren Rahmen 33 des Fußes 34 abgestützt. Die Trägerelemente 37 sind über Winkeleinstellvorrichtungen 35a, 35b mit dem Rahmen 33 des Fußes 34 verbunden.

Rollwinkel-Winkeleinstellvorrichtungen 35a ermöglichen es, den Rollwinkel der Drehplatte 40, und damit auch der von der Drehplatte 40 abgestützten vertikalen Säule 42, einzustellen. Eine Nickwinkel-Winkeleinstellvorrichtung 35b ermöglichen es, den Nickwinkel der Drehplatte 40, und damit auch der von der Drehplatte 40 abgestützten vertikalen Säule 42, einzustellen. Der Roll- und der Nickwinkel können insbesondere so eingestellt werden, dass ein an der Säule 42 angebrachter Träger 44 (siehe Figuren 2 bis 4) möglichst exakt horizontal ausgerichtet ist.

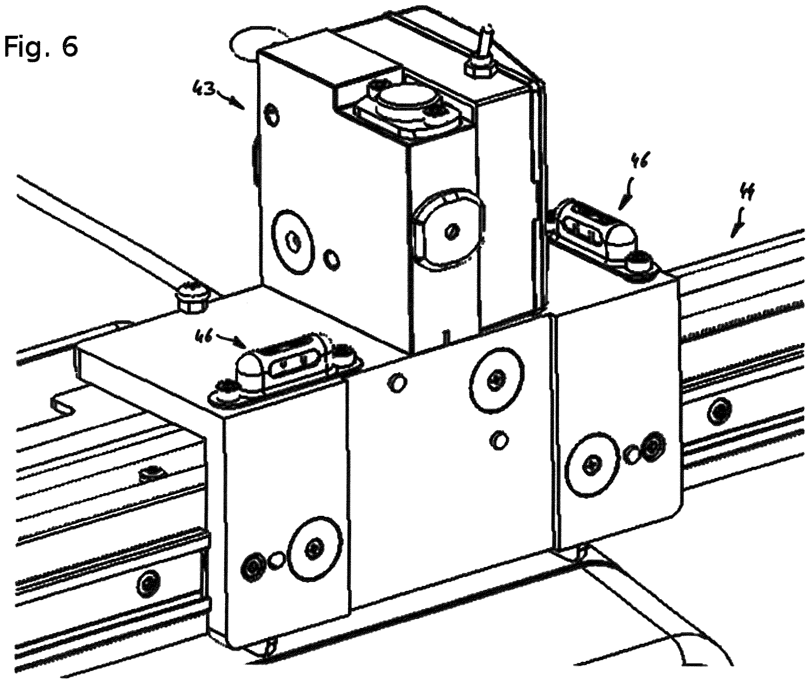

Um den Träger 44 möglichst exakt horizontal ausrichten zu können, sind an dem Träger 44 Neigungsmesselemente 46 (siehe Figur 4 und eine vergrößerte Darstellung in der Figur 6) angebracht. Bei den Neigungsmesselementen 46 kann es sich um Libellen, wie sie in Wasserwagen verwendet werden, oder um elektronische Neigungssensoren, die elektrische Signale abgeben, handeln.

Alternativ oder zusätzlich können der Roll- und der Nickwinkel von dem optischen System 26a, 26b durch Analyse der von den Kameras 27 aufgenommenen Bilder der Ausrichtelemente / Targets 28a, 28b bestimmt werden.

Der Gierwinkel α des Trägers 44 (siehe Figur 1) kann durch Drehen der Drehplatte 40 und der vertikalen Säule 42 um die Hochachse A variiert werden.

Auch der Gierwinkel α kann durch Analyse der von den Kameras 27 aufgenommenen Bilder der Ausrichtelemente / Targets 28a, 28b und/oder der Kalibrierelemente 30a, 30b bestimmt werden.

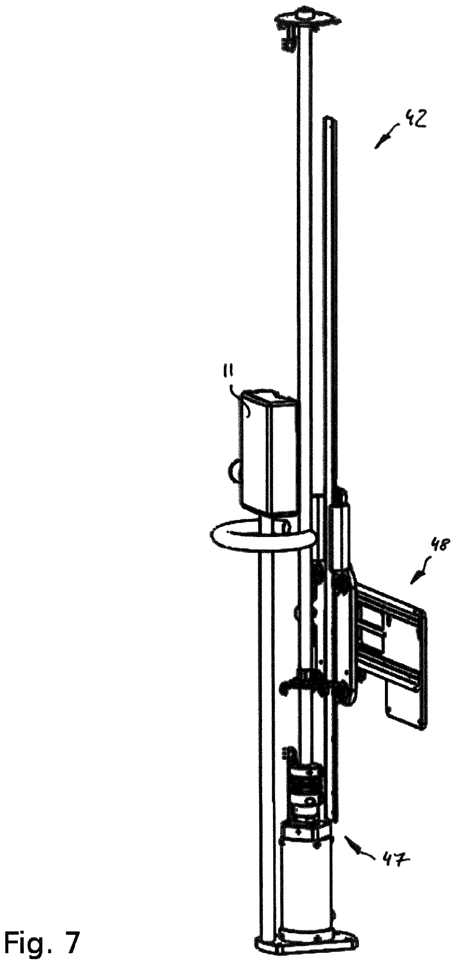

Figur 7 zeigt eine Ansicht der vertikalen Säule 42 ohne ihre Verkleidung 41, so dass das Innere der vertikalen Säule 42 sichtbar ist.

Die vertikale Säule 42 ist mit einer als Spindelantrieb ausgebildeten Höhenverstellvorrichtung 47 ausgestattet, dies es ermöglicht, die Höhe des Trägers 44, d.h. den vertikalen Abstand H zwischen dem Boden 5 und dem Träger 44 (siehe Figur 3) zu variieren. Die Höhenverstellvorrichtung 47 kann manuell, z.B. über eine Kurbel, oder motorisch, insbesondere durch einen Elektromotor, angetrieben werden.

Das (in der Figur 7 nicht gezeigte) Scheinwerfereinstellgerät 32 ist über eine Abstandsverstelleinrichtung 48 an der Säule 42 angebracht. Die Abstandsverstelleinrichtung 48 ermöglicht es, die Position des Scheinwerfereinstellgeräts 32 quer zu dem Träger 44, d.h. im Wesentlichen parallel zur geometrischen Fahrachse G bzw. zur Fahrzeuglängsmittelebene L, zu variieren. So kann die Position des Scheinwerfereinstellgeräts 32 in Längsrichtung des Fahrzeugs 6 in Abhängigkeit von der Position der Scheinwerfer 20 des Fahrzeugs 6 eingestellt werden, ohne dabei die Position des Kalibriertools 4 auf den Boden 5 des Messplatzes 2 zu verändern.

Die Höhe des Scheinwerfereinstellgeräts 32 über dem Boden 5 ist durch die Höhenverstellvorrichtung 47 gemeinsam mit dem (in der Figur 7 nicht gezeigten) Träger 44 verstellbar.

Die Kalibrierelemente 30a, 30b können in einer festen horizontalen Position, d.h. in festen Abständen von der vertikalen Säule 42, an dem Träger 44 angebracht sein.

Alternativ können die Kalibrierelemente 30a, 30b über eine Verstellvorrichtung 45, die es ermöglicht, die Position der Kalibrierelemente 30a, 30b entlang des Trägers 44 zu variieren, an dem Träger 44 angebracht sein.

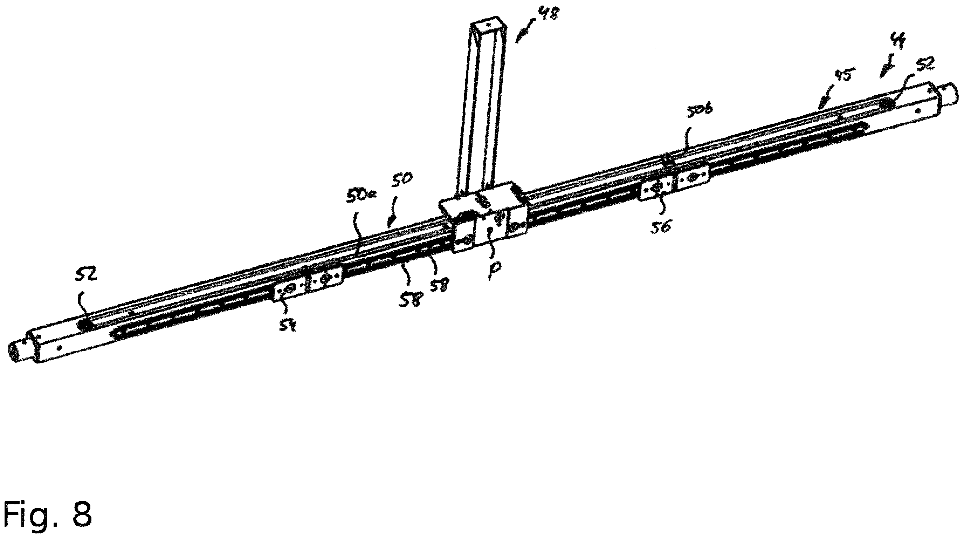

Die Kalibrierelemente 30a, 30b können insbesondere über eine Verstellvorrichtung 45 an dem Träger 44 angebracht sein, wie sie in der Figur 8 gezeigt ist. Figur 8 zeigt eine vergrößerte Darstellung eines Trägers 44 eines Kalibriertools 4 gemäß einem Ausführungsbeispiel der Erfindung.

An einer dem (in der Figur 8 nicht gezeigten) Fahrzeug 6 zugewandten Frontseite des Trägers 44 ist wenigstens eine Schlittenführungsschiene 58 angebracht, die zwei Schlitten 54, 56 führt. Jeder der beiden Schlitten 54, 56 ist dazu ausgebildet, jeweils ein (in der Figur 8 nicht gezeigtes) Kalibrierelement 30a, 30b zu halten.

An dem Träger 44 ist zusätzlich ein Zugelement 50, z.B. eine Kette oder ein (Draht-)Seil vorgesehen, dass in einer Endlosschleife zwischen zwei Umlenkelementen 52, z.B. Stiften oder Rollen, geführt ist.

Ein erster Schlitten 54 der beiden Schlitten 54, 56 ist mit einem ersten Strang 50a der Endlosschleife des Zugelements 50 verbunden, und ein zweiter Schlitten 56 der beiden Schlitten 54, 56 ist mit einem zweiten Strang 50b der Endlosschleife des Zugelements 50 verbunden. Diese Konstruktion hat zur Folge, dass sich die beiden Schlitten 54, 56 synchron, d.h. zugleich und mit der gleichen Geschwindigkeit, in entgegengesetzte Richtungen bewegen, wenn einer der beiden Schlitten 54, 56 bewegt wird.

Auf diese Weise ist sichergestellt, dass sich die beiden Schlitten 54, 56 und daran befestigte Kalibrierelemente 30a, 30b stets symmetrisch zum Mittelpunkt P bewegen und in jeder Position symmetrisch zum Mittelpunkt P angeordnet sind.

Die Schlitten 54, 56 können manuell, d.h. per Hand, bewegt werden. Alternativ kann wenigstens eines der Umlenkelemente 52 als angetriebenes Umlenkelement 52 ausgebildet sein, das über eine (nicht gezeigte) Kurbel oder von einem in den Figuren nicht gezeigten Motor angetrieben wird, um die Schlitten 54, 56 entlang der Schlittenführungsschiene 58 zu bewegen.

Auch andere Antriebsarten, wie z.B. ein Linearantrieb, sind möglich.

An dem Träger 44 kann eine Skala ausgebildet sein, die es ermöglicht, die Schlitten 54, 56 und damit auch die Kalibrierelemente 30a, 30b an vorgegebenen Positionen entlang des Trägers 44 zu positionieren.

Indem der Antrieb von einer geeigneten Steuervorrichtung 11 (siehe Figuren 1 bis 4) angetrieben wird, können die Schlitten 54, 56 und an den Schlitten 54, 56 angebrachte Kalibrierelemente 30a, 30b automatisch in vorgegebene Positionen bewegt werden.

Die Kalibrierelemente 30a, 30b können mechanische Kalibrierelemente (Mustertafeln) 30a, 30b sein, auf denen jeweils ein vorgegebenes, unveränderliches Muster 60, 61 ausgebildet ist.

Verschiedene Fahrzeugumfeldsensoren 22 und Fahrerassistenzsysteme 24, insbesondere Fahrzeugumfeldsensoren 22 / Fahrerassistenzsysteme 24 unterschiedlicher Hersteller, benötigen in der Regel unterschiedliche Muster 60, 61 zur Kalibrierung. Zur Kalibrierung eines vorgegebenen Fahrzeugumfeldsensors 22 werden daher Kalibrierelemente 30a, 30b, welche die für den jeweiligen Fahrzeugumfeldsensor 22 benötigten Muster 60, 61 zeigen, aus einem Satz von Kalibrierelementen 30a, 30b ausgewählt und an dem Träger 44, beispielsweise an beweglichen Schlitten 54, 56, befestigt. Die horizontalen Positionen der Kalibrierelemente 30a, 30b können bei Bedarf, wie zuvor beschrieben, durch Verschieben der Schlitten 54, 56 entlang des Trägers 44 variiert werden. Um alle auf dem Markt befindlichen Fahrzeugumfeldsensoren 22 und Fahrerassistenzsysteme 24 kalibrieren zu können, muss in diesem Fall eine große Zahl unterschiedlicher Mustertafeln vorgehalten werden.

Alternative können die Kalibrierelemente 30a, 30b als variable Kalibrierelemente 30a, 30b, z.B. als Bildschirme oder E-Paper, ausgebildet sein, die es ermöglichen, elektronisch, d.h. durch geeignetes elektrisches Ansteuern der variablen Kalibrierelemente 30a, 30b, eines aus einer Vielzahl von Mustern 60, 61 auszuwählen und anzuzeigen. Die gleichen Kalibrierelemente 30a, 30b können so eine Vielzahl unterschiedlicher Muster 60, 61 anzeigen und daher zum Kalibrieren einer Vielzahl unterschiedlicher Fahrzeugumfeldsensoren 22 verwendet werden. Da auf ein mechanisches Austauschen der Kalibrierelemente 30a, 30b verzichtet werden kann, wird der Bedienkomfort des Kalibriertools 4 erhöht.

Zusätzlich kann bei der Verwendung variabler Kalibrierelemente 30a, 30b auch die Größe der dargestellten Muster 60, 61 variiert werden. Durch Variieren der Größe und des Abstandes zwischen den dargestellten Mustern 60, 61 können verschiedene Entfernungen zwischen dem Fahrzeugumfeldsensor 22 und den Mustern 60, 61 simuliert werden. Es ist daher nicht nötig, den Abstand a zwischen dem Fahrzeugumfeldsensor 22 und dem Fahrzeug 6 zu variieren. Der Bedienkomfort kann daher auf diese Weise noch weiter erhöht werden.

Alternativ oder zusätzlich kann das wenigstens eine Kalibrierelement 30a, 30b eine Radarstrahlung reflektierende Oberfläche, insbesondere eine metallische Oberfläche, besitzen, so dass es als Kalibrierziel zur Kalibrierung eines Radarsensors einsetzbar ist.

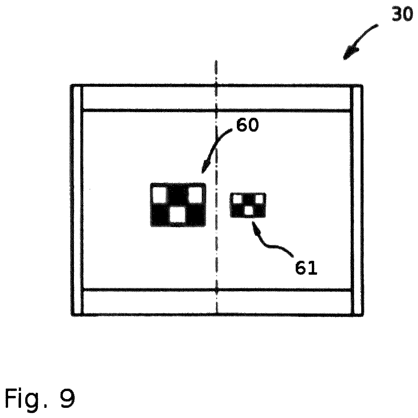

Figur 9 zeigt schematisch ein variables Kalibrierelement 30a mit zwei beispielhaft unterschiedlich groß dargestellten Mustern 60, 61.

Sind die variablen Kalibrierelemente 30a, 30b hinreichend groß ausgebildet, kann auf eine horizontale Verschiebbarkeit der Kalibrierelemente 30a, 30b, wie sie in der Figur 8 gezeigt ist, verzichtet werden. Stattdessen können die Muster 60, 61 auf den variablen Kalibrierelementen 30a, 30b an verschiedenen horizontalen Positionen dargestellt und auf diese Weise in horizontaler Richtung "verschoben" werden. Auch können die beiden Kalibrierelemente 30a, 30b zu einem gemeinsamen (hinreichend großen) variablen Kalibrierelement 30a, 30b zusammengefasst werden, auf dem zwei oder mehr Muster 60, 61 an den benötigten horizontalen Positionen dargestellt werden können.

Im Folgenden wird beispielhaft der Einsatz eines erfindungsgemäßen Kalibriertools 4 zum Kalibrieren wenigstens eines Fahrzeugumfeldsensors 22 eines Fahrerassistenzsystems 24 und zum Einstellen wenigstens eines Scheinwerfers 20 beschrieben.

Nachdem das Fahrzeug 6 auf dem Messplatz 2, beispielsweise auf den Fahrschienen 3 einer (in den Figuren nicht vollständig gezeigten) Hebe- oder Arbeitsbühne, platziert worden ist, werden mit Hilfe von Radadaptern 16 Messtafeln 17a, 17b, 18a, 18b an den Vorderrädern 10 und an den Hinterrädern 14 des Fahrzeugs 6 montiert.

Mit Hilfe eines optischen Systems 26a, 26b, welches die beiden Messköpfe 26a, 26b umfasst, wird die geometrische Fahrachse G des Fahrzeugs 6 bestimmt.

Optional können von dem optischen System 26a, 26b zusätzlich weitere Parameter des Fahrzeugs 6 bestimmt werden, insbesondere kann eine vollständige Achsvermessung durchgeführt werden. Über die Achsgeometrie hinaus können auch andere Parameter des Fahrzeugs 6, insbesondere Parameter, die zum Kalibrieren des Fahrerassistenzsystems 24 hilfreich sein können, wie z.B. der Überhang des Fahrzeugs 6, bestimmt werden.

Nachdem die geometrische Fahrachse G und ggf. weitere Parameter des Fahrzeugs 6 bestimmt worden sind, können die Messtafeln 17a, 17b von den Vorderrädern 10 des Fahrzeugs 6 entfernt werden, da sie im Folgenden nicht mehr benötigt werden.

In einem nächsten Schritt wird ein erfindungsgemäßes Kalibriertool 4 vor dem Fahrzeug 6 positioniert.

Sofern das Kalibriertool 4 eine Führungsschiene 38 aufweist, kann diese an geeigneten Fixpunkten des Messplatzes 2, beispielsweise an den Fahrschienen 3, fixiert werden.

Mit Hilfe der an dem Kalibriertool 4 angebrachten Targets 28a, 28b oder geeignet ausgebildeter Kalibrierelemente 30a, 30b, der Messköpfe 26a, 26b und der an den Hinterrädern 14 des Fahrzeugs 6 angebrachten Messtafeln 18a, 18b wird nun die Position des Kalibriertools 4 in Bezug auf das Fahrzeug 6 mit hoher Genauigkeit bestimmt. Dabei werden insbesondere die Abstände D, D' der Messtafeln 18a, 18b (oder der Kalibrierelemente 30a, 30b) des Kalibriertools 4 von der Hinterachse 12 des Fahrzeugs 6 und der Gierwinkel α des Kalibriertools 4 gegenüber der geometrische Fahrachse G bestimmt.

Das Kalibriertool 4 wird insbesondere so vor dem Fahrzeug 6 angeordnet, dass sein Träger 44 in einem rechten Winkel zur geometrische Fahrachse G des Fahrzeugs 6 ausgerichtet ist (α = 90°; Dₐ=D_{b}). Das Kalibriertool 4 wird dabei in einem Abstand D=Dₐ=D_{b} von der Hinterachse 12 des Fahrzeugs 6 positioniert, der in der Regel vom Hersteller des Fahrerassistenzsystems 24 vorgegebenen ist.

Da aus der vorherigen Fahrzeugvermessung auch die Position der Vorderachse 8 in Bezug auf die Messköpfe 26a, 26b bekannt ist, können alternativ auch die Abstände dₐ, d_{b} der Targets 28a, 28b von der Vorderachse 8 des Fahrzeugs 6 als Bezugswert verwendet werden.

Aufgrund der bekannten Abmessungen des Fahrzeugs 6 und insbesondere der bekannten Position des Fahrzeugumfeldsensors 22 innerhalb des Fahrzeugs 6 ist damit auch der Abstand a zwischen dem Fahrzeugumfeldsensor 22 und dem Kalibriertool 4 bekannt (siehe Figur 1).

Der Roll- und der Nickwinkel des Trägers 44 werden mit Hilfe der an dem Träger 44 angebrachten Neigungsmesselemente 46 (siehe Figur 6) bestimmt und so eingestellt, dass der Träger 44 horizontal und an dem Träger 44 angebrachte Kalibrierelemente 30a, 30b vertikal ausgerichtet sind.

Zur Kalibrierung eines optischen Fahrzeugumfeldsensors 22 weisen die an dem Träger 44 angebrachten Kalibrierelemente 30a, 30b optische Muster 60, 61 auf, die für den jeweiligen Fahrzeugumfeldsensor 22 und das Fahrerassistenzsystem 24 vorgegeben sind.

Die Höhe der Kalibrierelemente 30a, 30b / Muster 60, 61 über dem Boden 5 wird durch Bewegen des Trägers 44 entlang der vertikalen Säule 42 auf einen vorgegebenen Wert eingestellt. Optional wird auch der horizontale Abstand zwischen den Kalibrierelementen 30a, 30b, z.B. mit Hilfe der in der Figur 8 gezeigten Verstellvorrichtung 45, auf einen vorgegebenen Wert eingestellt.

Alle genannten Einstellungen können manuell, z.B. durch Verschieben/Drehen der entsprechenden Komponenten des Kalibriertools 4, oder durch Drehen entsprechender, in den Figuren nicht gezeigter, Kurbeln erfolgen.

Es können auch Motoren vorgesehen sein, die ein motorisches Einstellen ermöglichen. Bei einer motorischen Einstellung können die Motoren von der Steuervorrichtung 11 so angesteuert werden, dass das Kalibriertool 4 automatisch so positioniert und eingestellt wird, dass die Kalibrierelemente 30a, 30b jeweils in einer vom Hersteller des Fahrerassistenzsystems 24 vorgegebenen Ausrichtung und Position angeordnet sind. Durch automatisches Einstellen kann die Gefahr von Einstellungsfehlern minimiert werden, gleichzeitig wird der Bedienkomfort erhöht.

Die Steuervorrichtung 11 kann als Teil des Kalibriertools 4, als Teil des Achsmesssystems 26a, 26b oder als separate Steuervorrichtung 11, z.B. als Programm ("App") auf einem mobilen Gerät 62 (siehe Figur 1), wie z.B. einem Smartphone oder Tablet, ausgebildet sein.

Das Kalibriertool 4, das Achsmesssystem 26a, 26b und ggf. ein separates Steuergerät 62 können über (in den Figuren nicht gezeigte) Kabelverbindungen und/oder über drahtlose Verbindungen miteinander kommunizieren. Die drahtlosen Verbindungen können WLAN, Bluetooth^{®} oder andere geeignete Systeme zur drahtlosen Datenübertragung umfassen.

Nachdem die Kalibrierelemente 30a, 30b mit den Mustern 60, 61 positioniert und ausgerichtet worden sind, können das Fahrerassistenzsystem 24 und/oder der Fahrzeugumfeldsensor 22 unter Verwendung der Muster 60, 61 kalibriert werden. Im Fall variabler Kalibrierelemente 30a, 30b kann die Größe der angezeigten Muster 60, 61 bei Bedarf variiert werden, um unterschiedliche Abstände zwischen den Mustern 60, 61 und dem Fahrzeugumfeldsensor 22 zu simulieren.

Nach oder vor dem Kalibrieren des Fahrzeugumfeldsensors 22 wird das Scheinwerfereinstellgerät 32 vor einem der Scheinwerfer 20 des Fahrzeugs 6 positioniert und der Scheinwerfer 20 wird mit Hilfe des Scheinwerfereinstellgeräts 32 eingestellt.

Die Position des Scheinwerfereinstellgeräts 32 quer zum Träger 44, d.h. parallel zur geometrischen Fahrachse G bzw. Fahrzeuglängsmittelebene L kann dabei mit Hilfe der Abstandsverstelleinrichtung 48 auf einen gewünschten Abstand von der Fahrzeugfront eingestellt werden, ohne die Position und Ausrichtung des Trägers 44 und der Kalibrierelemente 30a, 30b zu verändern.

Die Position des Scheinwerfereinstellgeräts 32 quer zur geometrischen Fahrachse G bzw. Fahrzeuglängsmittelebene L des Fahrzeugs 6 kann durch seitliches Verschieben des Kalibriertools 4 variiert werden, bis das Scheinwerfereinstellgerät 32 in einer gewünschten Position vor einem der Scheinwerfer 20 des Fahrzeugs 6 angeordnet ist.

Weist das Fahrzeug 6 mehrere Scheinwerfer 20 auf, kann das Scheinwerfereinstellgerät 32 der Reihe nach vor jedem der Scheinwerfer 20 positioniert werden, um den jeweiligen Scheinwerfer 20 einzustellen.

Ist die Führungsschiene 38 des Kalibriertools 4 an wenigstens einem Fixpunkt, z.B. einer Fahrschiene 3, des Messplatzes 2 fixiert, kann das Kalibriertool 4 entlang der Führungsschiene 38 verschoben werden, um das Scheinwerfereinstellgerät 32 vor einem der Scheinwerfer 20 zu positionieren. Wird das Kalibriertool 4 entlang der Führungsschiene 38 verschoben, muss das Kalibriertool 4 nach dem Verschieben nicht erneut ausgerichtet werden, da die Ausrichtung durch die Führungsschiene 38 vorgegeben ist.

Ist keine Führungsschiene 38 vorhanden, oder ist eine vorhandene Führungsschiene 38 nicht am Messplatz 2 fixiert, muss das Kalibriertool 4 nach dem Verschieben neu ausgerichtet werden, bevor die Scheinwerfereinstellung durchgeführt werden kann. Dies kann beispielsweise, wie zuvor beschrieben, mit Hilfe eines optischen Systems, insbesondere mit Hilfe eines Achsmesssystems, 26a, 26b erfolgen. Alternativ kann an dem Kalibriertool 4 eine optische Zielvorrichtung 43, z.B. ein Laser, vorgesehen sein, die es ermöglicht, das Kalibriertool 4 auf das Fahrzeug 6 auszurichten.

Wird ein erfindungsgemäßes Kalibriertool 4 verwendet, können das Kalibrieren von Fahrzeugumfeldsensoren 22, wie sie für Fahrerassistenzsysteme 24 verwendet werden, und das Einstellen der Scheinwerfer 20 eines Fahrzeugs 6 mit einem einzigen Tool vorgenommen werden. Auf diese Weise können die Kosten und der Platzbedarf in der Werkstatt gesenkt und der Bedienkomfort erhöht werden.

Ein erfindungsgemäßes Kalibriertool 4 ermöglicht es insbesondere, das Positionieren und Ausrichten des Kalibriertools 4, wie es zum Kalibrieren von Fahrzeugumfeldsensoren 22 nötig ist, auch für die Scheinwerfereinstellung zu nutzen. Die Scheinwerfereinstellung kann auf diese Weise mit hoher Genauigkeit, insbesondere mit einer höheren Genauigkeit als eine herkömmliche Scheinwerfereinstellung, durchgeführt werden.

Das Fahrerassistenzsystem 24 und die Scheinwerfer 20 eines Fahrzeugs 6 können dabei in einem gemeinsamen Bezugssystem kalibriert werden. Dies ist insbesondere vorteilhaft, wenn die Funktion des Fahrerassistenzsystems 24 auch das Ansteuern der Scheinwerfer 20 umfasst, z.B. um ein automatisches (partielles) Abblenden der Scheinwerfer 20 bei Gegenverkehr zu ermöglichen. Die Zuverlässigkeit und die Qualität einer automatischen Ansteuerung der Scheinwerfer 20 durch ein Fahrerassistenzsystem 24 können dadurch verbessert werden.

## Patentansprüche

1. Kalibriertool (4) zum Kalibrieren eines Fahrzeugumfeldsensors (22) und zum Einstellen wenigstens eines Fahrzeugscheinwerfers (20), mit wenigstens einem Kalibrierelement (30a, 30b), das zum Kalibrieren eines Fahrzeugumfeldsensors (22) ausgebildet ist;
einem Scheinwerfereinstellgerät (32), das zum Einstellen wenigstens eines Fahrzeugscheinwerfers (20) ausgebildet ist;
das Kalibriertool **gekennzeichnet durch**
einen Fuß (34) mit Rollen (36), die dazu ausgebildet sind, das Kalibriertool (4) beweglich auf einem Boden (5) abzustützen; und
eine sich im Wesentlichen in einer vertikalen Richtung erstreckende Säule (42) und einem an der Säule (42) angebrachten Träger (44), der sich im Wesentlichen in einer horizontalen Richtung erstreckt, wobei das wenigstens eine Kalibrierelement (30a, 30b) und das Scheinwerfereinstellgerät (32) an dem Träger (44) angebracht sind.

2. Kalibriertool (4) nach Anspruch 1, wobei das wenigstens eine Kalibrierelement (30a, 30b) und das Scheinwerfereinstellgerät (32) in einer bekannten geometrischen Beziehung zueinander angeordnet sind.

3. Kalibriertool (4) nach Anspruch 1 oder 2, wobei die Säule (42), um eine im Wesentlichen vertikale Achse (A) drehbar ist.

4. Kalibriertool (4) nach einem der vorangehenden Ansprüche mit einer in Bezug auf das Fahrzeug (6) ausrichtbaren und fixierbaren Führungsschiene (38), wobei das Kalibriertool (4) entlang der Führungsschiene (38) bewegbar ist.

5. Kalibriertool (4) nach einem der vorangehenden Ansprüche mit zwei Kalibrierelementen (30a, 30b), die so miteinander gekoppelt sind, das sie synchron, insbesondere gegensinnig, bewegbar sind.

6. Kalibriertool (4) nach einem der vorangehenden Ansprüche, wobei das wenigstens eine Kalibrierelement (30a, 30b) ausgebildet ist, Radarstrahlung zu reflektieren und/oder wenigstens ein optisches Muster (60, 61), insbesondere wahlweise eines von mehreren verschiedenen optischen Mustern (60, 61), anzuzeigen, wobei das wenigstens eine Kalibrierelement (30a, 30b) insbesondere ausgebildet ist, die Größe des angezeigten Musters (60, 61) zu variieren.

7. Kalibriertool (4) nach einem der vorangehenden Ansprüche mit einer Höhenverstellvorrichtung (47), die es ermöglicht, die Höhe des wenigstens einen Kalibrierelements (30a, 30b) und des Scheinwerfereinstellgeräts (32) zu variieren, und/oder mit wenigstens einer Winkelverstellvorrichtung (35a, 35b), die es ermöglicht, den Gier-, Roll- und/oder Nickwinkel des wenigstens einen Kalibrierelements (30a, 30b) und des Scheinwerfereinstellgeräts (32) zu variieren.

8. Kalibriertool (4) nach einem der vorangehenden Ansprüche mit wenigstens einem Ausrichtelement (28a, 28b, 30a, 30b), insbesondere einem Target (28a, 28b), das in einer bekannten geometrischen Beziehung zu dem Kalibrierelement (30a, 30b) und/oder dem Scheinwerfereinstellgerät (32) angeordnet ist, und das es ermöglicht, das Kalibriertool (4) in Bezug auf das Fahrzeug (6) auszurichten, wobei das wenigstens eine Ausrichtelement (28a, 28b, 30a, 30b) insbesondere dazu ausgebildet ist, mit einem Achsmesssystem (26a, 26b) zusammenzuwirken, um das Kalibriertool (4) auf die geometrische Fahrachse (G) des Fahrzeugs (6) auszurichten.

9. Messplatz mit einem Kalibriertool (4) nach Anspruch 8 und einem System, insbesondere mit einem Achsmesssystem, das ausgebildet ist, die geometrischen Fahrachse (G) eines Fahrzeugs (6) zu bestimmen und mit dem Kalibriertool (4) zusammenzuwirken, um das Kalibriertool (4) zur geometrischen Fahrachse(G) des Fahrzeugs (6) auszurichten.

10. Messplatz nach Anspruch 9, wobei das System (26a, 26b) wenigstens zwei Messköpfe (26a, 26b) umfasst, von denen jeweils wenigstens ein Messkopf (26a, 26b) auf jeder Seite des Fahrzeugs (6) angeordnet und ausgebildet ist, Bilder von Messtafeln (17a, 17b, 18a, 18b), die an den Rädern (10, 14) des Fahrzeugs (6) angeordnet sind, optisch zu erfassen, wobei die Messköpfe (26a, 26b) insbesondere ausgebildet sind Bilder wenigstens eines Ausrichtelements (28a, 28b, 30a, 30b), insbesondere wenigstens eines Targets (28a, 28b), das an dem Kalibriertool (4) vorhanden ist, aufzunehmen und auszuwerten, um die Position und Ausrichtung des Kalibriertools (4) zu bestimmen.

11. Verfahren zum Kalibrieren eines Fahrzeugumfeldsensors (22) und zum Einstellen wenigstens eines Fahrzeugscheinwerfers (20), wobei das Verfahren umfasst:
(A) ein Kalibriertool (4) nach einem der Ansprüche 1 bis 8 vor einem Fahrzeug (6) zu positionieren und in einer vorgegebenen Orientierung zu dem Fahrzeug (6) auszurichten;
(B) ein von dem wenigstens einen Kalibrierelement (30a, 30b) des Kalibriertools (4) gezeigtes Muster (60, 61) zu verwenden, um wenigstens einen Fahrzeugumfeldsensor (22) zu kalibrieren; und
(C) das Scheinwerfereinstellgerät (32) des Kalibriertools (4) zu verwenden, um wenigstens einen Scheinwerfer (20) des Fahrzeugs (6) einzustellen.

12. Verfahren nach Anspruch 11, wobei das Verfahren umfasst, die Ausrichtung des Kalibriertools (4) vor dem Fahrzeug (6), insbesondere unter Verwendung eines Achsmesssystems (26a, 26b), zu bestimmen und die Ausrichtung des Kalibriertools (4) vor dem Fahrzeug (6) zu variieren, insbesondere automatisch zu variieren, bis die bestimmte Ausrichtung des Kalibriertools (4) mit einer vorgegebenen Ausrichtung übereinstimmt.

13. Verfahren nach einem der Ansprüche 11 oder 12, wobei das Verfahren umfasst, die Höhe (H)und/oder den Gier-, Roll- und/oder Nickwinkel des wenigstens einen Kalibrierelements (30a, 30b) und/oder des Scheinwerfereinstellgeräts (32) zu bestimmen und/oder einzustellen; und/oder den Abstand (a, Dₐ, D_{b}, dₐ, d_{b}) des Kalibriertools (4) von dem Fahrzeug (6), insbesondere den Abstand (a, Dₐ, D_{b}, dₐ, d_{b}) von einer Front oder einer Achse (8, 12) des Fahrzeugs (6), zu bestimmen und/oder einzustellen.

14. Verfahren nach einem der Ansprüche 11 bis 13, wobei das Verfahren umfasst,
das Scheinwerfereinstellgerät (32) vor einem ersten Scheinwerfer (20) des Fahrzeugs (6) zu positionieren;
das Scheinwerfereinstellgerät (32) zu verwenden, um den ersten Scheinwerfers des Fahrzeugs (6) einzustellen;
das Scheinwerfereinstellgerät (32) vor einem zweiten Scheinwerfer (20) des Fahrzeugs (6) zu positionieren; und
das Scheinwerfereinstellgerät (32) zu verwenden, um den zweiten Scheinwerfer (20) des Fahrzeugs (6) einzustellen.

15. Verfahren nach einem der Ansprüche 11 bis 14, wobei das Verfahren umfasst, die Größe eines auf dem Kalibrierelement (30a, 30b) angezeigten Musters (60, 61) zu variieren, insbesondere die Größe des Musters (61) als Funktion eines Abstandes (a, Dₐ, D_{b}, dₐ, d_{b}) des wenigstens einen Kalibrierelements (30a, 30b) und/oder des Scheinwerfereinstellgeräts (32) von dem Fahrzeug (6) zu variieren.

## Claims

1. A calibration tool (4) for calibrating a vehicle surroundings sensor (22) and for adjusting at least one vehicle headlight (20), comprising
at least one calibration element (30a, 30b) which is designed for calibrating a vehicle surroundings sensor (22);
a headlight adjustment device (32) which is designed for adjusting at least one vehicle headlight (20);
the calibration tool being **characterized by**
a base (34) having rollers (36) designed to movably support the calibration tool (4) on a floor (5); and
a column (42) extending substantially in a vertical direction and a beam (44) mounted on the column (42) and extending substantially in a horizontal direction, wherein the at least one calibration element (30a, 30b) and the headlight adjustment device (32) are mounted on the beam (44).

2. The calibration tool (4) according to claim 1,
wherein the at least one calibration element (30a, 30b) and the headlight adjustment device (32) are arranged in a known geometric relationship to each other.

3. The calibration tool (4) according to claim 1 or 2,
wherein the column (42) is rotatable about a substantially vertical axis (A).

4. The calibration tool (4) according to any of the preceding claims,
comprising a guide rail (38) which can be aligned and fixed in relation to the vehicle (6), wherein the calibration tool (4) can be moved along the guide rail (38).

5. The calibration tool (4) according to any of the preceding claims,
comprising two calibration elements (30a, 30b) which are coupled to one another such that they can be moved synchronously, in particular in opposite directions.

6. The calibration tool (4) according to any of the preceding claims,
wherein the at least one calibration element (30a, 30b) is configured to reflect radar radiation and/or to display at least one optical pattern (60, 61), in particular optionally one of a plurality of different optical patterns (60, 61), wherein the at least one calibration element (30a, 30b) is in particular designed to vary the size of the displayed pattern (60, 61).

7. The calibration tool (4) according to any of the preceding claims,
comprising a height adjustment device (47) which makes it possible to vary the height of the at least one calibration element (30a, 30b) and of the headlight adjustment device (32), and/or comprising at least one angle adjustment device (35a, 35b) which makes it possible to vary the yaw, roll and/or pitch angles of the at least one calibration element (30a, 30b) and of the headlight adjustment device (32).

8. The calibration tool (4) according to any of the preceding claims,
comprising at least one alignment element (28a, 28b, 30a, 30b), in particular a target (28a, 28b), which is arranged in a known geometric relationship to the calibration element (30a, 30b) and/or the headlight adjustment device (32) and which makes it possible to align the calibration tool (4) with respect to the vehicle (6), wherein the at least one alignment element (28a, 28b, 30a, 30b) is designed in particular to interact with an axis measuring system (26a, 26b) in order to align the calibration tool (4) with respect to the geometric travel axis (G) of the vehicle (6).

9. A measuring station comprising a calibration tool (4) according to claim 8 and a system, in particular with an axis measuring system, which is designed to determine the geometric travel axis (G) of a vehicle (6) and to interact with the calibration tool (4) in order to align the calibration tool (4) with respect to the geometric travel axis (G) of the vehicle (6).

10. The measuring station according to claim 9,
wherein the system (26a, 26b) comprises at least two measuring heads (26a, 26b), of which at least one measuring head (26a, 26b) is arranged on each side of the vehicle (6) and designed to optically capture images of measuring panels (17a, 17b, 18a, 18b) which are arranged on the wheels (10, 14) of the vehicle (6), wherein the measuring heads (26a, 26b) are designed in particular to capture and evaluate images of at least one alignment element (28a, 28b, 30a, 30b), in particular at least one target (28a, 28b) which is present on the calibration tool (4), in order to determine the position and orientation of the calibration tool (4).

11. A method for calibrating a vehicle surroundings sensor (22) and for adjusting at least one vehicle headlight (20), the method comprising the following steps:
(A) positioning a calibration tool (4) according to any of claims 1 to 8 in front of a vehicle (6) and aligning the same in a predetermined orientation with respect to the vehicle (6);
(B) using a pattern (60, 61) displayed by the at least one calibration element (30a, 30b) of the calibration tool (4), for calibrating at least one vehicle surroundings sensor (22); and
(C) using the headlight adjustment device (32) of the calibration tool (4) for adjusting at least one headlight (20) of the vehicle (6).

12. The method according to claim 11,
wherein the method comprises determining the orientation of the calibration tool (4) in front of the vehicle (6), in particular using an axis measuring system (26a, 26b), and varying the orientation of the calibration tool (4) in front of the vehicle (6), in particular automatically, until the determined orientation of the calibration tool (4) coincides with a predetermined orientation.

13. The method according to any of claims 11 or 12,
wherein the method comprises determining and/or adjusting the height (H) and/or the yaw, roll and/or pitch angles of the at least one calibration element (30a, 30b) and/or of the headlight adjustment device (32); and/or determining and/or adjusting the distance (a, Dₐ, D_{b}, dₐ, d_{b}) of the calibration tool (4) from the vehicle (6), in particular the distance (a, Dₐ, D_{b}, dₐ, d_{b}) from a front or an axle (8, 12) of the vehicle (6).

14. The method according to any of claims 11 to 13,
wherein the method comprises
positioning the headlight adjustment device (32) in front of a first headlight (20) of the vehicle (6);
using the headlight adjustment device (32) to adjust the first headlight of the vehicle (6);
positioning the headlight adjustment device (32) in front of a second headlight (20) of the vehicle (6); and
using the headlight adjustment device (32) to adjust the second headlight (20) of the vehicle (6).

15. The method according to any of claims 11 to 14,
wherein the method comprises
varying the size of a pattern (60, 61) displayed on the calibration element (30a, 30b), in particular varying the size of the pattern (61) as a function of a distance (a, Dₐ, D_{b}, dₐ, d_{b}) of the at least one calibration element (30a, 30b) and/or of the headlight adjustment device (32) from the vehicle (6).

## Revendications

1. Outil d'étalonnage (4) pour l'étalonnage d'un capteur d'environnement de véhicule (22) et pour le réglage d'au moins un phare de véhicule (20) présentant
au moins un élément d'étalonnage (30a, 30b) réalisé de manière à étalonner un capteur d'environnement de véhicule (22) ;
un appareil de réglage de phare (32) réalisé de manière à régler au moins un phare de véhicule (20) ;
l'outil d'étalonnage étant **caractérisé en ce qu'**il présente
un pied (34) avec roulettes (36) destinées à supporter l'outil d'étalonnage (4) de manière mobile sur le sol (5) ; et
une colonne (42) s'étendant pour l'essentiel à la verticale ainsi qu'un support (44) fixé à la colonne (42) et s'étendant pour l'essentiel à l'horizontale, sachant que l'élément d'étalonnage (30a, 30b), un au moins, et l'appareil de réglage de phare (32) sont fixés au support (44).

2. Outil d'étalonnage (4) selon la revendication 1, dans lequel l'élément d'étalonnage (30a, 30b), un au moins, et l'appareil de réglage de phare (32) sont disposés l'un par rapport à l'autre selon une relation géométrique connue.

3. Outil d'étalonnage (4) selon la revendication 1 ou 2, dans lequel la colonne (42) peut pivoter sur un axe (A) pour l'essentiel vertical.

4. Outil d'étalonnage (4) selon l'une quelconque des revendications précédentes avec un rail de guidage (38) fixable et orientable par rapport au véhicule (6), l'outil d'étalonnage (4) étant mobile le long du rail de guidage (38).

5. Outil d'étalonnage (4) selon l'une quelconque des revendications précédentes avec deux éléments d'étalonnage (30a, 30b), couplés entre eux de telle sorte qu'ils sont mobiles de manière synchrone, en particulier dans des sens opposés.

6. Outil d'étalonnage (4) selon l'une quelconque des revendications précédentes, dans lequel l'élément d'étalonnage (30a, 30b), un au moins, est réalisé de manière à réfléchir le rayonnement radar et/ou à afficher au moins un motif optique (60, 61), en particulier au choix l'un de plusieurs motifs optiques différents (60, 61), l'élément d'étalonnage (30a, 30b), un au moins, étant en particulier réalisé de manière à modifier la taille du motif affiché (60, 61).

7. Outil d'étalonnage (4) selon l'une quelconque des revendications précédentes avec un dispositif de réglage de la hauteur (47) qui permet de modifier la hauteur de l'élément d'étalonnage (30a, 30b), un au moins, et de l'appareil de réglage de phare (32), et/ou avec au moins un dispositif de réglage d'angle (35a, 35b) qui permet de modifier l'angle de lacet, l'angle de roulis et/ou l'angle de tangage de l'élément d'étalonnage (30a, 30b), un au moins, et de l'appareil de réglage de phare (32).

8. Outil d'étalonnage (4) selon l'une quelconque des revendications précédentes avec au moins un élément d'alignement (28a, 28b, 30a, 30b), en particulier une cible (28a, 28b) qui est disposée selon une relation géométrique connue par rapport à l'élément d'étalonnage (30a, 30b) et/ou l'appareil de réglage de phare (32), et qui permet d'aligner l'outil d'étalonnage (4) par rapport au véhicule (6), l'élément d'alignement (28a, 28b, 30a, 30b), un au moins, étant en particulier réalisé de manière à interagir avec un système de mesure d'axe (26a, 26b) afin d'aligner l'outil d'étalonnage (4) sur l'axe de déplacement géométrique (G) du véhicule (6).

9. Poste de mesure présentant un outil d'étalonnage (4) selon la revendication 8 et un système, en particulier un système de mesure d'axe, réalisé de manière à déterminer l'axe de déplacement géométrique (G) d'un véhicule (6) et à interagir avec l'outil d'étalonnage (4) afin d'aligner l'outil d'étalonnage (4) sur l'axe de déplacement géométrique (G) du véhicule (6).

10. Poste de mesure selon la revendication 9, dans lequel le système (26a, 26b) comprend au moins deux têtes de mesure (26a, 26b), dont au moins une tête de mesure (26a, 26b) est disposée respectivement de chaque côté du véhicule (6) et réalisée de manière à saisir optiquement des images de tables de mesure (17a, 17b, 18a, 18b) qui sont disposées sur les roues (10, 14) du véhicule (6), les têtes de mesure (26a, 26b) étant en particulier réalisées de manière à capturer et à évaluer les images d'au moins un élément d'alignement (28a, 28b, 30a, 30b), en particulier d'au moins une cible (28a, 28b) présente sur l'outil d'étalonnage (4), afin de déterminer la position et l'alignement de l'outil d'étalonnage (4).

11. Procédé d'étalonnage d'un capteur d'environnement de véhicule (22) et de réglage d'au moins un phare de véhicule (20), le procédé comprenant :
(A) le positionnement d'un outil d'étalonnage (4) selon l'une quelconque des revendications 1 à 8 devant un véhicule (6) et son alignement selon une orientation prédéfinie par rapport au véhicule (6) ;
(B) l'utilisation d'un motif (60, 61) affiché par l'élément d'étalonnage (30a, 30b), un au moins, de l'outil d'étalonnage (4) en vue d'étalonner au moins un capteur d'environnement de véhicule (22) ; et
(C) l'utilisation de l'appareil de réglage de phare (32) de l'outil d'étalonnage (4) en vue de régler au moins un phare (20) du véhicule (6).

12. Procédé selon la revendication 11, le procédé comprenant la détermination de l'alignement de l'outil d'étalonnage (4) devant le véhicule (6), en particulier via l'utilisation d'un système de mesure d'axe (26a, 26b), et la modification de l'alignement de l'outil d'étalonnage (4) devant le véhicule (6), en particulier sa modification automatique, jusqu'à ce que l'alignement déterminé de l'outil d'étalonnage (4) concorde avec un alignement prédéfini.

13. Procédé selon l'une quelconque des revendications 11 ou 12, le procédé comprenant la détermination et/ou le réglage de la hauteur (H) et/ou de l'angle de lacet, de roulis et/ou de tangage de l'élément d'étalonnage (30a, 30b), un au moins, et/ou de l'appareil de réglage de phare (32) ; et/ou la détermination et/ou le réglage de la distance (a, Dₐ, D_{b}, dₐ, d_{b}) de l'outil d'étalonnage (4) par rapport au véhicule (6), en particulier la distance (a, Dₐ, D_{b}, dₐ, d_{b}) par rapport à une face avant ou un essieu (8, 12) du véhicule (6).

14. Procédé selon l'une quelconque des revendications 11 à 13, le procédé comprenant
le positionnement de l'appareil de réglage de phare (32) devant un premier phare (20) du véhicule (6) ;
l'utilisation de l'appareil de réglage de phare (32) pour régler le premier phare du véhicule (6) ;
le positionnement de l'appareil de réglage de phare (32) devant un deuxième phare (20) du véhicule (6) ; et
l'utilisation de l'appareil de réglage de phare (32) pour régler le deuxième phare (20) du véhicule (6).

15. Procédé selon l'une quelconque des revendications 11 à 14, le procédé comprenant la modification de la taille d'un motif (60, 61) affiché sur l'élément d'étalonnage (30a, 30b), en particulier la modification de la taille du motif (61) en fonction d'une distance (a, Dₐ, D_{b}, dₐ, d_{b}) de l'élément d'étalonnage (30a, 30b), un au moins, et/ou de l'appareil de réglage de phare (32) par rapport au véhicule (6).
